# EUROPEAN PATENT APPLICATION

(11) **EP 4 443 945 A1**
(43) Date of publication of application: **09.10.2024**
(21) Application number: 21965717.8
(22) Date of filing: 29.11.2021
(51) Int. Cl.: H04W 24/08, H04W 52/02

(54) **TERMINAL AND BASE STATION**

(71) Applicant: NTT DOCOMO, INC., Tokyo 100-6150 (JP)
(72) Inventor: OHARA, Tomoya, Tokyo 100-6150 (JP); NAKAMURA, Takuma, Tokyo 100-6150 (JP); KUMAGAI, Shinya, Tokyo 100-6150 (JP); KURITA, Daisuke, Tokyo 100-6150 (JP)
(74) Representative: Hoffmann Eitle
(86) International application number: PCT/JP2021/043690
(87) International publication number: WO 2023/095351

(57) **Abstract**

A terminal includes: a reception unit configured to receive information, indicating an available frequency range or an unavailable frequency range, transmitted from a base station to a plurality of terminals; and a control unit configured to determine a frequency range for use in communication based on the information.

## Description

### Technical Field

The present invention relates to a terminal and a base station in a radio communication system.

### Background Art

A new radio (NR) (also referred to as "5G") which is a successor system of long term evolution (LTE) is known. In NR, a technology is used that satisfies requirements such as a large-capacity system, a high-speed data transmission rate, low delay, simultaneous connection of a large number of terminals, low cost, and power saving.

Further, studies on Beyond 5G and 6G have been started in Japan and abroad, and further improvement of communication performances, diversification of use cases, and the like are assumed in Beyond 5G and 6G.

### Related Art Document

### Non-Patent Documents

Non-Patent Document 1: 3GPP TS 38.213 V16.7.0 (2021-09)
Non-Patent Document 2: 3GPP TS 38.331 V16.6.0 (2021-09)

### SUMMARY OF THE INVENTION

### Problems to be Solved by the Invention

In NR, power consumption of a network increases due to an increase in the number of antennas or a wider frequency band. The increase in power consumption leads to an increase in cost for operators and an increase in carbon emissions to the global environment. Therefore, it is necessary to reduce the power consumption in the network.

The present invention has been made in view of the above, and an object of the present invention is to provide a technique for reducing power consumption on a network side in a communication system including a base station and a terminal.

### Means for Solving the Problems

According to the disclosed technique, there is provided a terminal including:
a reception unit configured to receive information, indicating an available frequency range or an unavailable frequency range, transmitted from a base station to a plurality of terminals; and
a control unit configured to determine a frequency range for use in communication based on the information.

### Effects of the Invention

According to the disclosed technique, a technique for reducing power consumption on a network side in a communication system including a base station and a terminal is provided.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram for explaining an outline of an embodiment;
[Fig. 4] FIG. 4 is a diagram for explaining Example 1-1;
[Fig. 5] FIG. 5 is a diagram for explaining Example 1-1;
[Fig. 6] FIG. 6 is a diagram for explaining Example 1-1;
[Fig. 7] FIG. 7 is a diagram for explaining Example 1-1;
[Fig. 8] FIG. 8 is a diagram for explaining Example 1-1;
[Fig. 9] FIG. 9 is a diagram for explaining Example 1-1;
[Fig. 10] FIG. 10 is a diagram for explaining Example 2-1;
[Fig. 11] FIG. 11 is a diagram for explaining Example 2-2;
[Fig. 12] FIG. 12 is a diagram showing an example of a functional configuration of a base station 10 according to an embodiment of the present invention;
[Fig. 13] FIG. 13 is a diagram showing an example of a functional configuration of a terminal 20 according to an embodiment of the present invention;
[Fig. 14] FIG. 14 is a diagram showing an example of a hardware configuration of the base station 10 or the terminal 20 according to an embodiment of the present invention; and
[Fig. 15] FIG. 15 is a diagram showing a configuration example of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing NR (e.g., Non-Patent Documents 1 and 2). The radio communication system (the base station 10 and the terminal 20) according to the present embodiment can basically perform an operation according to an existing technical specification. However, in order to solve the problem, the base station 10 and the terminal 20 also perform operations that are not included in the existing technical specification. In the description of Examples described later, operations and the like that are not in the existing technical specifications are mainly described. Note that the numerical values described below are all examples.

In the embodiment of the present invention, the duplex scheme may be a time division duplex (TDD) scheme, a frequency division duplex (FDD) scheme, or another scheme (for example, flexible duplex).

In the embodiment of the present invention, "configuring" a radio parameter or the like may mean that a predetermined value is pre-configured or that a radio parameter notified from the base station 10 or the terminal 20 is configured. Note that the notation "A/B" used in the present embodiment means "A or B, or A and B".

### (System Configuration)

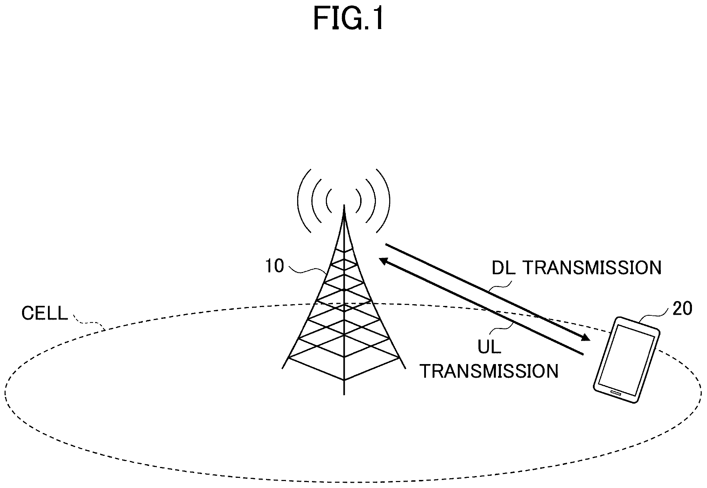

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain.

OFDM is used as a radio access scheme. In the frequency-domain, at least 15 kHz, 30 kHz, 120 kHz, and 240 kHz are supported as subcarrier spacing (SCS). In the present embodiment, a larger SCS may be supported. Further, a resource block is formed with a predetermined number (for example, 12) of consecutive subcarriers regardless of SCS.

When performing initial access to a cell, for example, the terminal 20 detects SSB (SS/PBCH block), and identifies SCS for PDCCH, PDSCH, PUCCH, or the like, for example, based on PBCH included in the SSB.

In the time domain, a slot is formed with a plurality of OFDM symbols (for example, 14 symbols regardless of the subcarrier spacing). Hereinafter, an OFDM symbol is referred to as a "symbol". A slot is a scheduling unit. Further, a subframe of a 1 ms section is defined, and a frame including 10 subframes is defined. The number of symbols per slot is not limited to 14. Further, as a frame, a frame having a definition different from the frame having the above-described definition may be used.

As illustrated in FIG. 1, the base station 10 transmits control information or data to the terminal 20 in downlink (DL), and receives control information or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives control information or data from the base station 10 in DL and transmits control information or data to the base station 10 in UL, thereby using various communication services provided by the radio communication system.

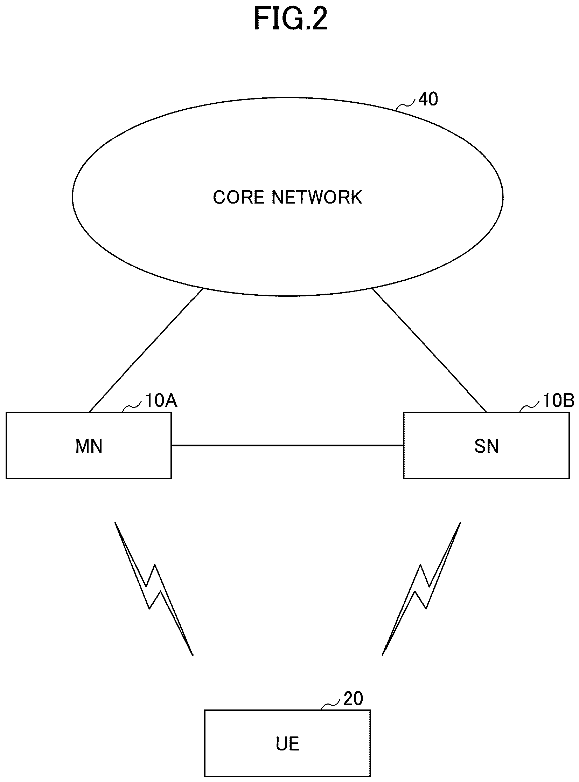

FIG. 2 illustrates a configuration example of a radio communication system in a case where NR-Dual connectivity (NR-DC) is executed. As shown in FIG. 2, the base stations 10A and 10B are provided as a master node (MN) and a secondary node (SN), respectively. The base stations 10A and 10B are connected to a core network. The terminal 20 communicate with both the base stations 10A and 10B.

A cell group provided by the base station 10A serving as the MN is referred to as a master cell group (MCG), and a cell group provided by the base station 10B serving as the SN is referred to as a secondary cell group (SCG). A PCell in a secondary cell group (SCG) may be referred to as a PSCell. The operation in this embodiment may be performed in either of the configurations shown in FIGS. 1 and 2. Also, the DC may be NR-NR DC, NR-LTE DC, or DC other than these.

Furthermore, in DC, a case where CCs are multiplexed between a plurality of base stations to perform transmission and reception may also be referred to as "carrier aggregation". In addition, in the present application, the CC and the cell may be treated as the same meaning.

In the radio communication system according to the present embodiment, when an unlicensed band is used, LBT (Listen Before Talk) is executed. The base station 10 or the terminal 20 performs transmission when the LBT result indicates "idle", and does not perform transmission when the LBT result indicates "busy".

### (On problem)

As described above, in NR, power consumption of the network increases due to increase in the number of antennas or wider frequency bands. The increase in power consumption leads to an increase in cost for operators and an increase in carbon emissions to the global environment. Therefore, it is necessary to reduce the power consumption in the network.

In the following, as a technique for reducing power consumption in the network side, a technique for performing control in a frequency domain for reducing power consumption of a base station will be described.

### (Outline of Embodiment)

In the present embodiment, the terminal 20 (and the base station 10) can perform communication using one or more carriers (referred to as component carriers (CCs)). In the following description, unless otherwise specified, a CC may be a CC for only UL (uplink), a CC for only DL (downlink), or a CC common to UL and DL. Furthermore, communication performed by using the CC may be UL communication or DL communication.

In addition, it is assumed that "Band" in the present embodiment is a band number such as n1, n2, or the like. The "bandwidth" is assumed to be information using numerical values of frequencies such as 1920MHz to 1980MHz. However, these are examples, and the "Band" may be information such as 1920MHz to 1980MHz, and the "bandwidth " may be a band number such as n1 or n2.

In addition, the "cell" includes, for example, one DL CC, one DL CC and one UL CC, or one CC common to UL and DL. Further, the "CC" may be identified by an identifier such as a channel number (ARFCN or the like).

Further, a BWP (band width part) is information indicating a certain frequency range in a CC. The BWP may be a BWP for only UL, a BWP for only DL, or a BWP common to UL and DL. The band, the frequency band, the cell, the BWP, the CC, and the CC group may be collectively referred to as a "frequency range". The frequency range may include one or more CCs. Information indicating a portion of a frequency band in a CC, such as a BWP, may be referred to as a "partial frequency range".

In the present embodiment, the base station 10 notifies the terminal 20 of a frequency range available for DL/UL communication or a frequency range unavailable for DL/UL communication. For example, the base station 10 narrows down the frequency range used for communication with the terminal as much as possible in accordance with the sum of the traffic amounts of terminals communicating with the base station 10.

The base station 10 notifies the terminal 20 of an available frequency range/unavailable frequency range so that the operation of the terminal 20 does not fail due to the narrowing of the frequency range. The terminal 20 determines a frequency range to use according to the available frequency range/unavailable frequency range notified from the base station 10, and performs a communication operation in a CC in the frequency range. This enables power consumption of the base station 10 to be reduced while continuing communication with the terminal 20.

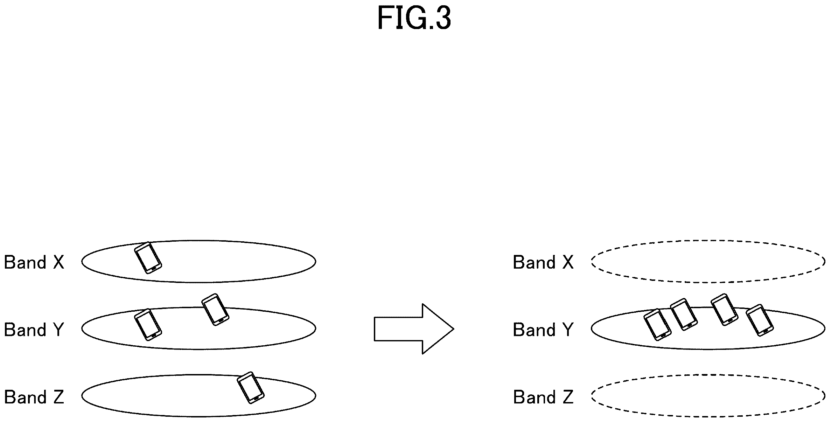

An example is shown in FIG. 3. As illustrated on the left side of FIG. 3, first, the base station 10 communicates with a plurality of terminals 20 using Bands X to Z. Thereafter, the base station 10 determines to perform communication only in the Band Y for power reduction, and notifies the terminal 20 of information indicating that the Bands X and Z are unavailable, for example. As a result, as shown in the right side of FIG. 3, communication is performed only in Band Y.

In the present embodiment, the base station 10 constantly (for example, periodically) monitors the traffic amount related to communication with (a set of) terminals 20, and for example, when the total traffic amount becomes equal to or less than a certain threshold, performs an operation of narrowing the frequency range (for example, an operation of making a certain frequency range unavailable), and when the traffic amount exceeds the threshold, performs an operation of returning the narrowed frequency range to the original range. However, such control on the base station 10 side is an example.

In addition, the base station 10 may analyze videos around the base station 10 using a DNN (Deep Neural Network), and may perform an operation of narrowing down the frequency range (for example, an operation of making a certain frequency range unavailable) based on the number of users or the user density around the base station 10 obtained from the DNN. For example, when the number of users in the communication area of the base station 10 is equal to or less than a threshold, the operation of narrowing down the frequency range is performed. The videos may be acquired (captured) by the base station 10 or may be transmitted from an external server or the like to the base station 10.

Hereinafter, as more specific operation examples, Example 1 and Example 2 will be described. The outline of Example 1 and Example 2 is as follows. Example 1 and Example 2 may be combined and executed.

Example 1: The base station 10 notifies the terminal 20 of a CC available for communication in the terminal 20 or a CC unavailable for communication in units of CCs or CC groups.

Example 2: The base station 10 notifies the terminal 20 of a frequency range available for communication in a CC or a frequency range unavailable for communication in the CC.

First, Example 1 will be described by dividing into Example 1-1 and Example 1-2.

### (Example 1-1)

First, Example 1-1 will be described. In Example 1-1, the base station 10 notifies the terminal 20 of a Band/frequency band/cell available (or unavailable) at a certain time point. Note that, although the Band/frequency band/cell is used here, the terminal 20 may be notified of an available (or unavailable) CC (or CC group).

The notification method is not limited to a specific method, but for example, the base station 10 notifies all surrounding terminals of a Band/frequency band/cell that is available (or unavailable) as broadcast information. The "all surrounding terminals" may be all terminals within a range where broadcast information from the base station 10 reaches.

In addition, information indicating whether one or more bands/frequency bands/cells are available may be notified by information notified from the base station 10 in a certain cell. For example, when a certain terminal 20 connects to cells A and B of the base station 10 and receives information indicating that Band-X and Band-Y are available in the cell A from the base station 10, the terminal 20 can determine that Band-X and Band-Y are the frequency range used for communication and can determine to use only CCs included in Band-X and Band-Y among CCs configured for the terminal 20 in the cells A and B.

The base station 10 may notify the terminal 20 of information on whether or not the cell is available for each cell. For example, when the base station 10 can operate cell A, cell B, and cell C, if the base station 10 determines to perform an operation of enabling only the cell B to narrow the frequency range at a certain time point, the base station 10 transmits information (for example, broadcast information or system information) indicating "cell A = unavailable, cell B = available, cell C = unavailable" to the terminal 20. The terminal 20 that has received this information grasps that only a CC of the cell A is available.

Hereinafter, terminal operation examples 1 to 3 in Example1-1 will be described.

### < Example1-1: Terminal operation example 1>

When the terminal 20 determines that a certain CC among all CCs configured for the terminal 20 is unavailable based on the information received from the base station 10, the terminal 20 may not perform an operation (example: data transmission and reception, control signal monitoring, control signal transmission, measurement, synchronization, or the like) related to the CC.

The above-mentioned state (a state in which an operation related to the CC is not performed) may be newly defined or may be a transition to the existing SCell deactive state. For example, when the terminal 20 determines that CC-A corresponding to SCell-A is not available, the terminal 20 may cause the SCell-A to transition to the SCell deactive state.

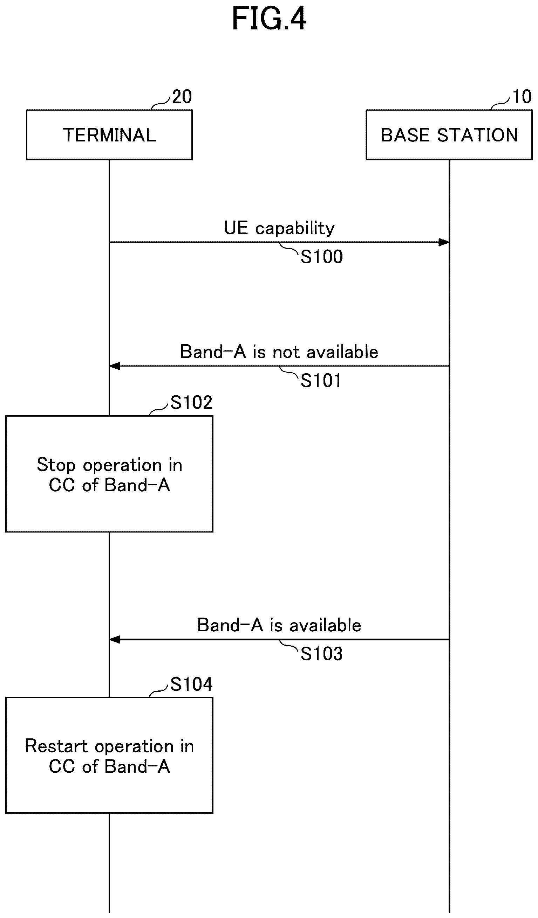

FIG. 4 shows a sequence example in the terminal operation example 1. In S100, the terminal 20 transmits capability information to the base station 10. The capability information includes, for example, information indicating that the operation according to Example 1-1 is supported. Note that, also in the sequence described below, the terminal 20 may notify the base station 10 of the capability information.

Here, it is assumed that the terminal 20 communicates with the base station 10 using a CC in one or more bands including Band-A. In S101, the terminal 20 receives information indicating that Band-A is not available from the base station 10. In S102, the terminal 20 stops operating on the CC included in Band-A. The cell corresponding to the CC may be a PCell or an SCell. When the cell corresponding to the CC is an SCell, as described above, stopping the operation in the CC may be transitioning to the SCell deactive state.

Thereafter, in S103, the terminal 20 receives information indicating that Band-A is available. In S104, the terminal 20 resumes the operation on the CC included in Band-A. Such an operation is an example.

### <Example 1-1: Terminal operation example 2>

Next, a terminal operation example 2 will be described. When the terminal 20 determines that a certain CC among all CCs configured for the terminal 20 is available based on the information received from the base station 10, the terminal 20 may start to perform an operation (e.g., data transmission and reception, control signal monitoring, control signal transmission, measurement, synchronization, etc.) related to the CC.

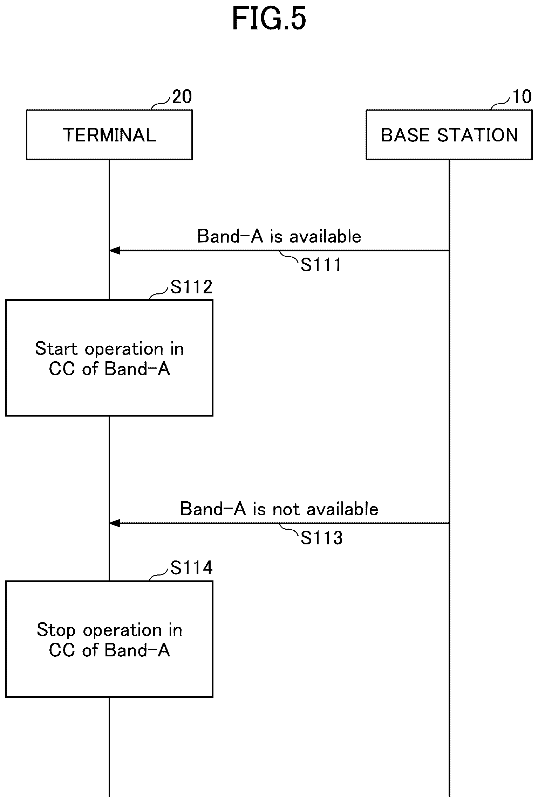

FIG. 5 shows a sequence example in the terminal operation example 2. Here, it is assumed that the terminal 20 does not start operation in the area of the base station 10 until the terminal 20 is notified of information on an available frequency range in the area of the base station 10.

In S111, the terminal 20 receives information indicating that Band-A is available from the base station 10. In S112, the terminal 20 starts operation on the CC included in the Band-A.

Thereafter, in S113, the terminal 20 receives information indicating that Band-A is unavailable. In S114, the terminal 20 stops operation on the CC included in Band-A.

### <Example 1-1: Terminal operation example 3>

Next, a terminal operation example 3 will be described. In the terminal operation example 3, when the terminal 20 determines that a certain CC (referred to as CC-X) among all CCs configured in the terminal 20 is unavailable based on the information received from the base station 10, the terminal 20 may stop operation related to the CC and start a related operation (example: data transmission and reception, control signal monitoring, control signal transmission, measurement, synchronization, and the like) in a CC (referred to as CC-Y) in an available Band/frequency band/cell.

The terminal 20 may use CC-Y only for a temporary period until CC-X notified of unavailability becomes available again, or may continue to use CC-Y even if CC-X becomes available again while CC-Y is available after CC-X notified of unavailability is switched to CC-Y.

The base station 10 may notify the terminal 20 of a Band/frequency band/cell or a CC-Y of a switching destination for the CC-X in the Band/frequency band/cell of which unavailability is notified in advance, or may notify the terminal 20 of the switching destination when the unavailability is notified.

The terminal 20 may autonomously select the switching destination according to measurement results of each CC or the like. When the terminal 20 autonomously selects the switching destination, a threshold value, a condition, or the like for the selection may be defined, or the base station 10 may notify the terminal 20 of the threshold value, the condition, or the like in advance. For example, information indicating "switching to a CC in an available band having a reception power equal to or higher than threshold P" is included in the information from the base station 10 indicating that the Band-A to which the CC-X belongs is unavailable.

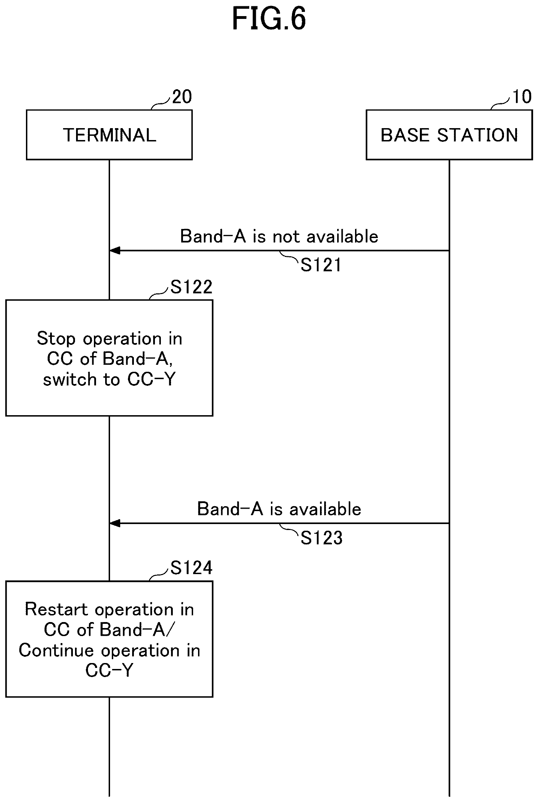

FIG. 6 shows a sequence example in the terminal operation example 3. First, it is assumed that the terminal 20 communicates with the base station 10 using a CC in one or more Bands including Band-A. In S121, the terminal 20 receives information indicating that Band-A is not available from the base stations 10. In S122, the terminal 20 stops operation in the CC (CC-X) included in the Band-A, and starts operation, that was performed in the CC-X, in the CC (CC-Y) of the available Band.

Both of the Cells corresponding to CC-X and CC-Y may be a PCell (PSCell) or an SCell.

Thereafter, in S123, the terminal 20 receives information indicating that Band-A is available from the base station 10. In S124, the terminal 20 resumes operation in the CC-X included in the Band-A. At this time, the operation in CC-Y may be continued or stopped. In S124, the terminal 20 may continue the operation in CC-Y without resuming the operation in CC-X.

### (Example 1-2)

Next, Example 1-2 will be described. In Example 1-2, the base station 10 notifies the terminal 20 of a cell available (or unavailable) at a certain time point by Cell activation/deactivation. Regarding the Cell activation/deactivation, in addition to the existing SCell activation/deactivation, activation/deactivation of a PCell or a PSCell may be defined, and information related to the configuration may be notified from the base station 10 to the terminal 20.

The method of notifying the Cell activation/deactivation is not limited to a specific method, but for example, the base station 10 may notify all surrounding terminals of the Cell activation/deactivation as broadcast information. The "all surrounding terminals" may be all terminals within a range where broadcast information from the base station 10 reaches. The base station 10 may notify a plurality of terminals of the Cell activation/deactivation by RRC, MAC CE, or DCI. The method of notifying the plurality of terminals may be a plurality of unicasts, a group cast, or a multicast.

Since the configuration of PCell/PSCell/SCell may be different for each terminal 20, an activation/deactivation corresponding to information (cell ID, frequency information, and the like) of each cell may be notified.

For example, when the base station 10 operates cells of Cell-ID=1,2,3, from the viewpoint of each terminal, there is a terminal that activates and uses only the cell of Cell-ID=1, and there is a terminal that activates and uses the cells of Cell-ID=1 and 3. For example, when the base station 10 broadcasts a notification of the Cell deactivation for the cell with cell-ID=1, for example, a terminal that activates and uses only the cell with cell-ID=1 stops using the cell with cell-ID=1 and performs switching to another cell. The terminal using the cells of Cell-ID=1 and 3 stops using the cell of Cell-ID=1.

In addition, one or a plurality of cells may be activated/deactivated by a Cell activation/deactivation notified from the base station 10 in a certain cell. For example, when a certain terminal 20 is connected to cells A, B, and C of the base station 10 and receives a Cell deactivation indicating that the cells B and C are unavailable in the cell A from the base station 10, the terminal 20 may stop the operation of the CCs of the cells B and C.

Hereinafter, terminal operation examples 1 to 3 in Example 1-2 will be described.

### <Example 1-2: Terminal operation example 1>

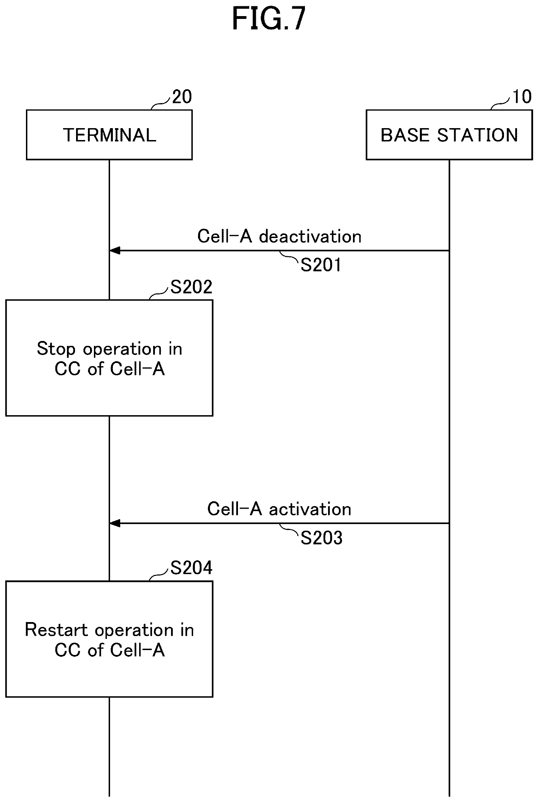

FIG. 7 shows an example of a sequence in the terminal operation example 1. Here, it is assumed that the terminal 20 communicates with the base station 10 using CCs in one or more Cells including Cell-A. In S201, the terminal 20 receives a Cell-A deactivation indicating that the Cell-A is unavailable from the base station 10. In S202, the terminal 20 stops the operation on a CC in the Cell-A deactivation (deactivates the Cell-A).

Thereafter, in S203, the terminal 20 receives a Cell-A activation indicating that the Cell-A is available. In S204, the terminal 20 resumes the operation on the CC in Cell-A (activates Cell-A).

### <Example 1-2: Terminal operation example 2>

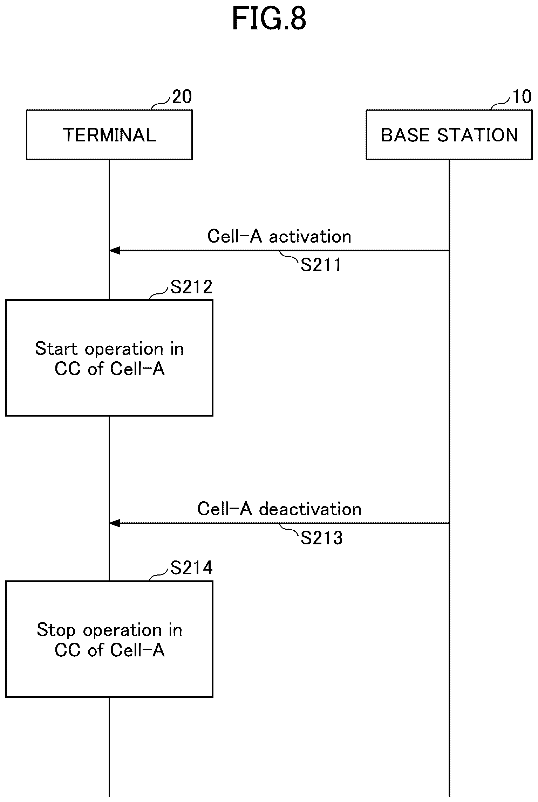

FIG. 8 shows a sequence example in the terminal operation example 2. Here, it is assumed that the terminal 20 does not start operation in the area of the base station 10 until a Cell activation is notified in the area of the base station 10.

In S211, the terminal 20 receives a Cell-A activation indicating that the Cell-A is available from the base station 10. In S212, the terminal 20 activates the Cell-A and starts operating on a CC in the cell.

Thereafter, in S213, the terminal 20 receives a Cell-A deactivation indicating that the Cell-A is unavailable. In S214, the terminal 20 stops operation on a CC in the Cell-A.

### <Example 1-2: Terminal operation example 3>

Next, a terminal operation example 3 will be described. In the terminal operation example 3, when the terminal 20 determines that a certain CC (referred to as CC-X) among all CCs configured in the terminal 20 is unavailable based on a cell deactivation received from the base station 10, the terminal 20 may stop operation related to the CC and start the related operation (example: data transmission and reception, control signal monitoring, control signal transmission, measurement, synchronization, and the like) in a CC (referred to as CC-Y) in an available Band/frequency band/cell.

The terminal 20 may use CC-Y only for a temporary period until CC-X notified of unavailability becomes available again, or may continue to use CC-Y even if CC-X becomes available again while CC-Y is available after CC-X notified of unavailability is switched to CC-Y.

The Band/frequency band/cell of the switching destination for the CC-X or the CC-Y of the switching destination for the CC-X of which the unavailability is notified may be notified from the base station 10 to the terminal 20 in advance, or the switching destination may be included in the Cell deactivation for notifying the unavailability.

The terminal 20 may autonomously select the switching destination according to measurement results of each CC or the like. When the terminal 20 autonomously selects the switching destination, a threshold value, a condition, or the like for the selection may be defined, or the base station 10 may notify the terminal 20 of the threshold value, the condition, or the like in advance. For example, the information "switch to a CC in an active cell having a reception power equal to or higher than the threshold P" is included in the Cell deactivation from the base station 10 indicating that the CC-X is unavailable.

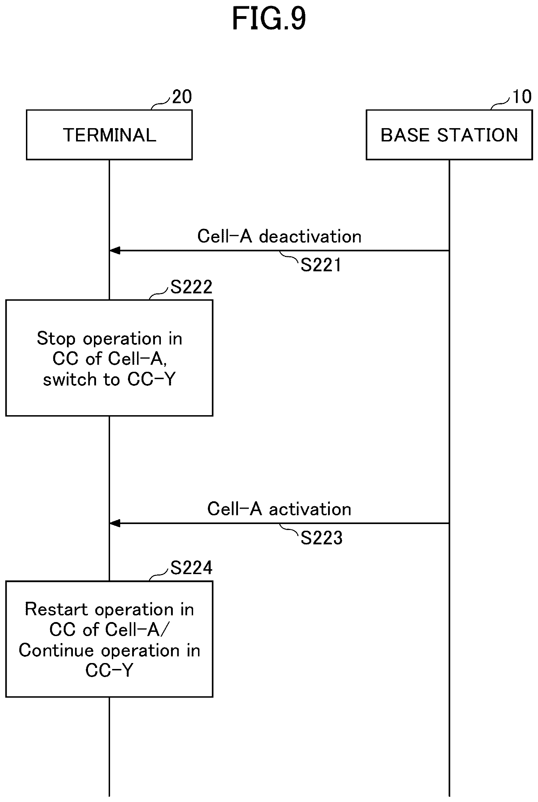

FIG. 9 shows an example of a sequence in the terminal operation example 3. First, it is assumed that the terminal 20 is communicating with the base station 10 using a CC in one or more cells including Cell-A. In S221, the terminal 20 receives a Cell-A deactivation indicating that the Cell-A is unavailable from the base station 10. In S222, the terminal 20 stops operation on the CC (CC-X) in the Cell-A, and starts operation performed on the CC-X on the CC (CC-Y) of the active cell.

Both of the Cells corresponding to CC-X and CC-Y may be a PCell (PSCell) or an SCell.

Thereafter, in S223, the terminal 20 receives a Cell-A activation indicating that the Cell-A is available. In S224, the terminal 20 resumes operation in CC-X in Cell-A. At this time, the operation in CC-Y may be continued or stopped. In S224, the terminal 20 may continue the operation in CC-Y without resuming the operation in CC-X.

By the operation of Example 1 described above, it is possible to reduce power consumption by narrowing the frequency range of the base station 10 while continuing the communication operation of the terminal 20.

Hereinafter, Example 2 will be described. As described above, in Example 2, the base station 10 notifies the terminal 20 of a frequency range available for communication in a CC in the terminal 20 or a frequency range unavailable for communication in a CC in the terminal 20. Example 2 will be described separately as Example 2-1 and Example 2-2.

### (Example 2-1)

First, Example 2-1 will be described. In Example 2-1, the base station 10 notifies the terminal 20 of a frequency range in a CC available (or unavailable) at a certain time point.

The notification method is not limited to a specific method, but for example, the base station 10 notifies all surrounding terminals of a frequency range available (or unavailable) as broadcast information for each cell. The "all surrounding terminals" may be all terminals within a range where broadcast information from the base station 10 reaches.

In addition, a frequency range available (or unavailable) in each CC of one or a plurality of cells may be notified by information notified from the base station 10 in a certain cell. For example, a certain terminal 20 is connected to cells A and B of the base station 10, and in the cell A, the base station 10 may notify the terminal 20 of an available frequency range=X of the cell A and an available frequency range=Y of the cell B.

Hereinafter, terminal operation examples 1 to 3 in Example 2-1 will be described.

### <Example 2-1: Terminal operation example 1>

First, the terminal operation example 1 will be described. When the terminal 20 receives information of an available frequency range for a certain CC from the base station 10, the terminal 20 performs an operation related to the CC within the frequency range. Here, "to perform" may mean to continue an operation if the operation has been performed before the notification.

In the CC, an operation performed outside the available frequency range before the notification may be switched to be performed within the available frequency range. The information on the switching method and the switching destination resource may be defined or may be notified from the base station 10 to the terminal 20.

The operation performed outside the available frequency range is, for example, data transmission and reception, reference signal transmission and reception, control signal monitoring, control signal transmission, measurement, synchronization, or the like.

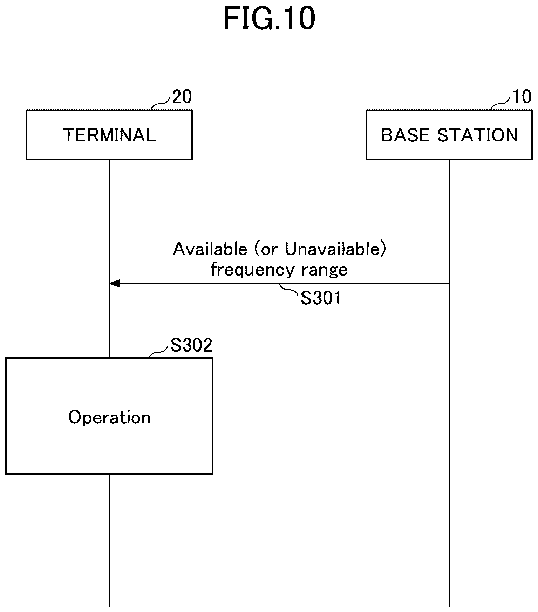

A sequence example in the terminal operation example 1 will be described with reference to FIG. 10. In S301, the terminal 20 receives information indicating a certain range of available frequencies of a certain CC from the base station 10. In S302, the terminal 20 performs an operation in the available-frequency range of the CC.

As an example, it is assumed that the entire range of frequencies of the CC is 0 to 100, and information indicating that the range of frequencies 0 to 50 is available is received in S301. Here, if the terminal 20 uses the range of frequencies 51 to 100 at a time point before S301, the terminal 20 stops operation in the range of frequencies 51 to 100 and operates in the range of frequencies 0 to 50 in S302.

### <Example 2-1: Terminal operation example 2>

Next, a terminal operation example 2 will be described. When the terminal 20 receives information on an unavailable frequency range for a certain CC from the base station 10, the terminal 20 stops operation in the frequency range. Here, it is assumed that the unavailable frequency range is available before the notification.

In the CC, an operation performed in the unavailable frequency range (range that was available) before the notification may be switched to be performed in an available frequency range. The information on the switching method and the switching destination resource may be defined, or may be notified from the base station 10 to the terminal 20.

The operation performed in the unavailable frequency range (range that was available) before the notification is, for example, data transmission and reception, reference signal transmission and reception, control signal monitoring, control signal transmission, measurement, synchronization, or the like.

The sequence example in the terminal operation example 2 will also be described with reference to FIG. 10. In S301, the terminal 20 receives information indicating a certain range of unavailable frequencies of a certain CC from the base station 10. In S302, the terminal 20 stops operation in the unavailable range of frequencies in the CC.

As an example, it is assumed that the entire range of frequencies of the CC is 0 to 100, and information indicating that the range of frequencies 0 to 50 is unavailable is received in S301. Here, if the terminal 20 has used the entire range of frequencies 0 to 100 at a time point before S301, the terminal 20 stops operation in the range of frequencies 0 to 50 and operates in the range of frequencies 51 to 100 in S302.

### <Example 2-1: Terminal operation example 3>

The terminal 20 may switch an active BWP when receiving a notification indicating that all or a part of the frequency range of the active BWP is unavailable at the notification time point.

The sequence example in the terminal operation example 3 will also be described with reference to FIG. 10. In S301, the terminal 20 receives information indicating a certain range of unavailable frequencies of a certain CC from the base station 10. In S302, the terminal 20 switches the active BWP from the current active BWP to another BWP.

As an example, it is assumed that the entire range of frequencies of the CC at the time of S301 is 0 to 100, and the range of frequencies of the active BWP is 10 to 40. In addition, it is assumed that there is a BWP having a frequency range of 60 to 90 as a BWP which is not active but is configured.

When information indicating that the range of frequencies 0 to 50 is unavailable is received in S301, the terminal 20 deactivates the BWP of 10 to 40 and activates the BWP of 60 to 90 in S302.

### (Example 2-2)

Example 2-2 will be described. In Example 2-2, the base station 10 notifies the terminal 20 of a frequency range in a CC available (or unavailable) at a certain time point by BWP switching (switching of active BWP).

The information of "BWP switching" notified from the base station 10 to the terminal 20 may be any information as long as the information indicates deactivating an active BWP and activating an inactive BWP. For example, the information of "BWP switching" may be identification information of a BWP to be activated.

The notification method is not limited to a specific method, but for example, the base station 10 may notify all surrounding terminals of BWP switching as broadcast information. The "all surrounding terminals" may be all terminals within a range where broadcast information from the base station 10 reaches. The base station 10 may notify a plurality of terminals in the cell of the BWP switching by RRC, MAC CE, or DCI. The method of notifying the plurality of terminals may be a plurality of unicasts, groupcast, or multicast.

Since the configuration of the BWP may be different for each terminal 20, the switching may be notified based on information (frequency information or the like) of each BWP.

For example, the base station 10 determines to make a certain frequency range (referred to as a range R) in a certain CC (referred to as CC-A) unavailable. Here, it is assumed that the terminal 20-1 and the terminal 20-3 have an active BWP included in the range R, and the terminal 20-2 does not have an active BWP included in the range R. At this time, the base station 10 may notify only the terminal 20-1 and the terminal 20-3 of the BWP switching.

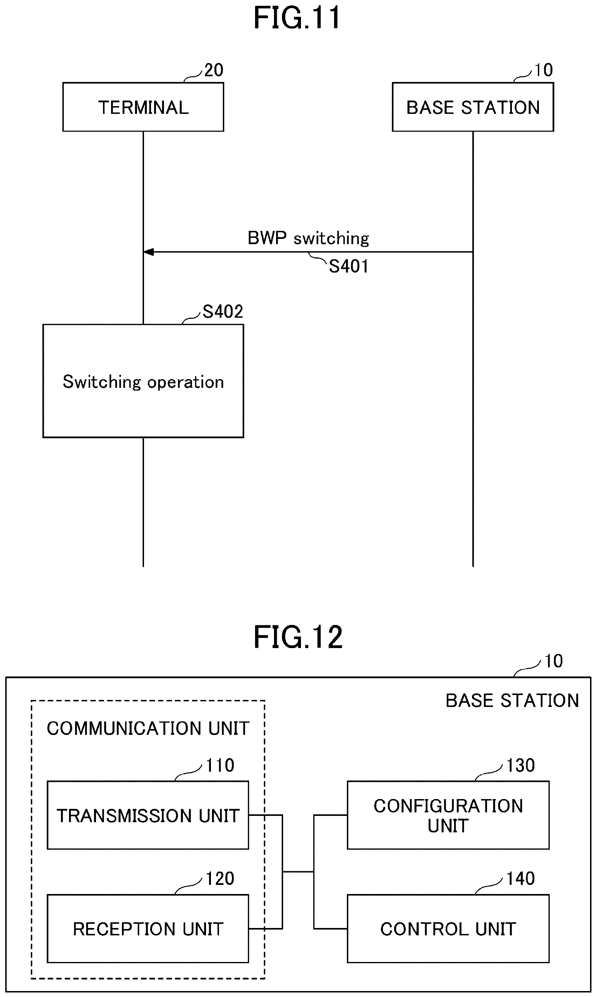

A sequence example in Example 2-2 will be described with reference to FIG. 11. In S401, the terminal 20 receives BWP switching of a certain CC from the base station 10. In S402, the terminal 20 switches the active BWP from a certain BWP to another BWP in the CC.

By the operation of Example 2 described above, it is possible to reduce power consumption by narrowing the frequency range of the base station 10 while continuing the communication operation of the terminal 20.

### (Other Examples)

Hereinafter, examples common to Example 1 and Example 2 will be described.

### <example 1>

As illustrated in the example of S100 in FIG. 4, in the present embodiment, UE capability may be defined and notified from the terminal 20 to the base station 10. Example of the content (information) of the UE capability are as follows.

- Information indicating whether or not the terminal 20 has a CC switching capability in response to a notification of availability/deactivation of a frequency range.
- Information indicating whether the terminal 20 has a capability of switching a BWP in response to a notification of availability of a frequency range.
- Information indicating whether or not the terminal 20 supports PCell activation/deactivation.
- Information indicating whether or not the terminal 20 supports multicast notification/broadcast notification of Cell activation/deactivation.
- Information indicating whether or not the terminal 20 supports multicast notification/broadcast notification of BWP switching.

### <example 2>

For CC switching, BWP switching, and state switching of Cell activation/deactivation in the present embodiment, a switching delay rule similar to that of conventional switching may be applied, or a switching delay rule different from that of conventional switching may be applied.

The switching delay is a delay from the timing at which the terminal 20 receives a switching instruction (example: BWP switching) to the timing at which the terminal 20 starts an operation after the switching (example: communication in a new active BWP).

### (Apparatus Configuration)

Next, functional configuration examples of the base station 10 and the terminal 20 that execute the processes and operations described above will be described.

### <Base station 10>

FIG. 12 is a diagram illustrating an example of a functional configuration of the base station 10. As illustrated in FIG. 12, the base station 10 includes a transmission unit 110, a reception unit 120, a configuration unit 130, and a control unit 140. The functional configuration shown in FIG. 12 is merely an example. The functional sections and the names of the functional units may be any as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The control unit 140 also includes a function of determining a frequency range to be used. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver. The control unit 140 may be referred to as a processor.

### <Terminal 20>

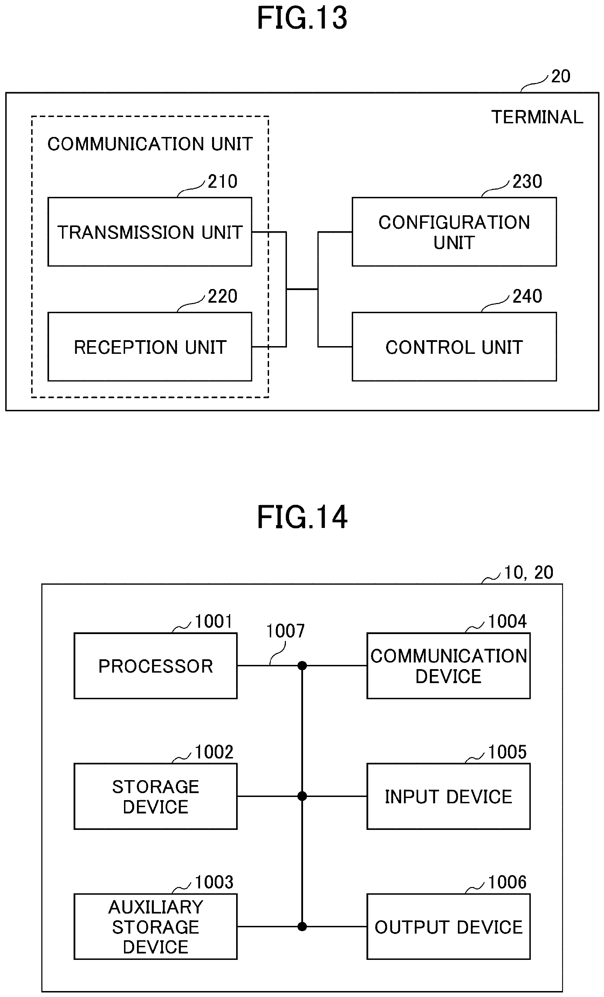

FIG. 13 is a diagram illustrating an example of a functional configuration of the terminal 20. As illustrated in FIG. 13, the terminal 20 includes a transmission unit 210, a reception unit 220, a configuration unit 230, and a control unit 240. The functional configuration shown in FIG. 11 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 120 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The control unit 240 includes a function of determining a frequency range to be used. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver. The control unit 240 may be referred to as a processor.

### <Supplementary Notes>

The present embodiment provides at least a terminal and a base station described in the following items 1 to 6.

### (Item 1)

A terminal including:
a reception unit configured to receive information, indicating an available frequency range or an unavailable frequency range, transmitted from a base station to a plurality of terminals; and
a control unit configured to determine a frequency range for use in communication based on the information.

### (Item 2)

The terminal as described in item 1,
wherein, when the reception unit receives information indicating an unavailable frequency range, the control unit stops operation in a component carrier of the unavailable frequency range, and starts operation in a component carrier of the available frequency range.

### (Item 3)

The terminal as described in item 1 or 2,
wherein the information is a cell activation or a cell deactivation.

### (Item 4)

A terminal including:
a reception unit configured to receive information, indicating an available frequency range or an unavailable frequency range in a component carrier, transmitted from a base station to a plurality of terminals; and
a control unit configured to determine a frequency range for use in communication based on the information.

### (Item 5)

The terminal as described in item 4,
wherein the information is information requesting BWP switching.

### (Item 6)

A base station including:
a control unit configured to determine a frequency range for use in communication; and
a transmission unit configured to transmit information, indicating an available frequency range or an unavailable frequency range, to a plurality of terminals based on determining based the control unit.

According to any of items 1 to 6, there is provided a technique for reducing power consumption on a network (base station) side in a communication system including a base station and a terminal. In particular, according to item 2, the terminal can continue operation while reducing the power of the base station. According to item 3, since the cell activation or the cell deactivation which is a signal used in the existing technology is used for an SCell, implementation is relatively easy. According to item 5, since BWP switching, which is a signal used in the existing technology, is used, implementation is relatively easy.

### (Hardware Configuration)

The block diagrams (FIGS. 12 and 13) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the base station 10, the terminal 20 and the like in one embodiment of this disclosure may function as a computer for performing the processing of a radio communication method of this disclosure. FIG. 14 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 12 may be attained by a control program that is stored in the storage device 1002 and is operated by the processor 1001. Also, for example, the control unit 240 of the terminal 20 shown in FIG. 13 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

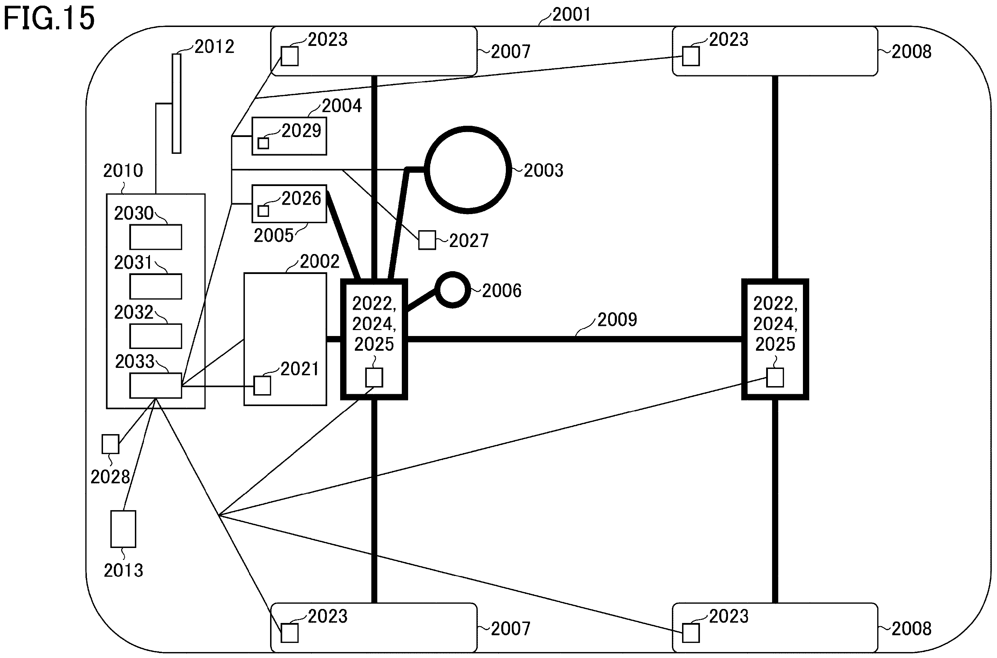

The terminal 20 or the base station 10 may be provided in a vehicle. FIG. 15 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the terminal 20 may be incorporated in the communication module 2013. The function of the base station 10 may be mounted in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a reception unit configured to receive information, indicating an available frequency range or an unavailable frequency range, transmitted from a base station to a plurality of terminals; and
a control unit configured to determine a frequency range for use in communication based on the information.

2. The terminal as claimed in claim 1,
wherein, when the reception unit receives information indicating an unavailable frequency range, the control unit stops operation in a component carrier of the unavailable frequency range, and starts operation in a component carrier of the available frequency range.

3. The terminal as claimed in claim 1 or 2,
wherein the information is a cell activation or a cell deactivation.

4. A terminal comprising:
a reception unit configured to receive information, indicating an available frequency range or an unavailable frequency range in a component carrier, transmitted from a base station to a plurality of terminals; and
a control unit configured to determine a frequency range for use in communication based on the information.

5. The terminal as claimed in claim 4,
wherein the information is information requesting BWP switching.

6. A base station comprising:
a control unit configured to determine a frequency range for use in communication; and
a transmission unit configured to transmit information, indicating an available frequency range or an unavailable frequency range, to a plurality of terminals based on determining by the control unit.
